# EUROPEAN PATENT APPLICATION

(11) **EP 2 187 638 A1**
(43) Date of publication of application: **19.05.2010**
(21) Application number: 08703215.7
(22) Date of filing: 15.01.2008
(51) Int. Cl.: H04N 7/18, H04N 5/66

(54) **DISPLAY**

(71) Applicant: Mitsubishi Electric Corporation, Tokyo 100-8310 (JP)
(72) Inventor: TOMARU, Yoshihiro, Tokyo 100-8310 (JP); HARADA, Masayuki, Tokyo 100-8310 (JP); FUJIMOTO, Hitoshi, Tokyo 100-8310 (JP)
(74) Representative: Pfenning, Meinig & Partner GbR
(86) International application number: PCT/JP2008/050351
(87) International publication number: WO 2009/090727

(57) **Abstract**

A display includes a plurality of matching sections 15 for identifying areas corresponding to partial areas taken with cameras 2a - 2f in an imaging area taken with a wide-view camera 1, a projective transformation section 17 for projecting the images of the partial areas taken with the cameras 2a - 2f onto the image spaces of the areas identified by the matching sections 15, an overlapped area synthesizing section 19 for synthesizing overlapped areas of the images of the plurality of partial areas projected by the projective transformation section 17, and a rectangular area dividing section 20 for dividing the image after the synthesis to a plurality of rectangular areas, and that a plurality of distortion correcting sections 22 correct the distortion of the images of the partial areas taken with the cameras 2a - 2f in accordance with the rectangular areas resulting from the division by the rectangular area dividing section 20, and display the images after the correction on displays 5a - 5f.

## Description

### TECHNICAL FIELD

The present invention relates to a display for displaying high-resolution, wide-field images.

### BACKGROUND ART

Development of large-screen displays requires large-screen video contents.
Conventional displays display wide-field, high-resolution images that are produced by taking wide areas in such a manner that individual imaging areas are overlapped using a plurality of cameras.
As a technique of producing the wide-field, high-resolution images, there is one, for example, which matches images taken with a wide-view camera like a fisheye camera and images taken in detail with a plurality of common cameras (images obtained by taking partial areas of the imaging area of the wide-view camera), and transforms the images taken with the plurality of common cameras in such a manner as to bring them together with the image taken with the wide-view camera (see Patent Document 1, for example).
This makes it possible to produce images equivalent to the wide-field images at high-resolution.

However, the conventional display is for displaying the wide-field, high-resolution images on a single display, and not for displaying on a multi-display consisting of a plurality of displays.
For this reason, when displaying images on a large screen, they are displayed on a display with a large screen area. However, since the resolution of displays has the limits of technology (resolution of displays on the market is generally only 1920 × 1080 as a standard), the high-resolution display has its limits .

Patent Document 1: Japanese Patent Laid-Open No. 2004-135209 (Paragraph [0008], and FIG. 1)

With the foregoing configuration, the conventional display can produce and display wide-field, high-resolution images on the display. However, the images are displayed on a single display, and not displayed on a multi-display composed of a plurality of displays. For this reason, when displaying the images on a large screen, they are displayed on a display with a large screen area. However, since the resolution of the display has the limits of technology, there is a problem in that the high-resolution display has a limit.

The present invention is implemented to solve the foregoing problem. Therefore it is an object of the present invention to provide a display capable of large-screen display of wide-field, high-resolution images.

### DISCLOSURE OF THE INVENTION

A display according to the present invention is configured in such a manner that it includes a plurality of area identifying means for identifying areas corresponding to partial areas taken with partial imaging means in an imaging area taken with a wide-view imaging means; image projection means for projecting images of the partial areas taken with the plurality of partial imaging means onto image spaces of the areas identified by the area identifying means; and rectangular area dividing means for synthesizing overlapped areas of the images of the plurality of partial areas projected by the image projection means, and for dividing the image after the synthesis to a plurality of rectangular areas, wherein a plurality of distortion correcting means correct distortion of the images of the partial areas taken with the partial imaging means in accordance with the rectangular areas to which the rectangular area dividing means divides, and display images after the correction on displays.

This offers an advantage of being able to carry out a large-screen display of wide-field, high-resolution images.

### BRIEF DESCRIPTION OF THE DRAWINGS

FIG. 1 is a block diagram showing a configuration of a display of an embodiment 1 in accordance with the present invention;
FIG. 2 is a flowchart showing processing contents of the display of the embodiment 1 in accordance with the present invention;
FIG. 3 is a diagram showing positional relationships of cameras 2a - 2f, second image processing units 4a - 4f and displays 5a - 5f;
FIG. 4 is a diagram showing a manner of projective transformations of images of partial areas taken with the cameras 2a - 2f onto image spaces of areas specified by a matching section 15 (image spaces of areas corresponding to the partial areas in the imaging area taken with a wide-view camera 1);
FIG. 5 is a diagram showing examples of an overlapped area;
FIG. 6 is a diagram showing a manner of synthesizing overlapped areas in a horizontal direction;
FIG. 7 is a diagram showing cross areas of overlapped areas;
FIG. 8 is a diagram showing a manner of creating a rectangular areas;
FIG. 9 is a block diagram showing a configuration of a display of an embodiment 2 in accordance with the present invention;
FIG. 10 is a flowchart showing processing contents of the display of the embodiment 2 in accordance with the present invention;
FIG. 11 is a diagram showing points eligible for a reference point; and
FIG. 12 is a diagram showing scanning termination in rectangular search processing.

### BEST MODE FOR CARRYING OUT THE INVENTION

The best mode for carrying out the invention will now be described with reference to the accompanying drawings to explain the present invention in more detail.

### EMBODIMENT 1

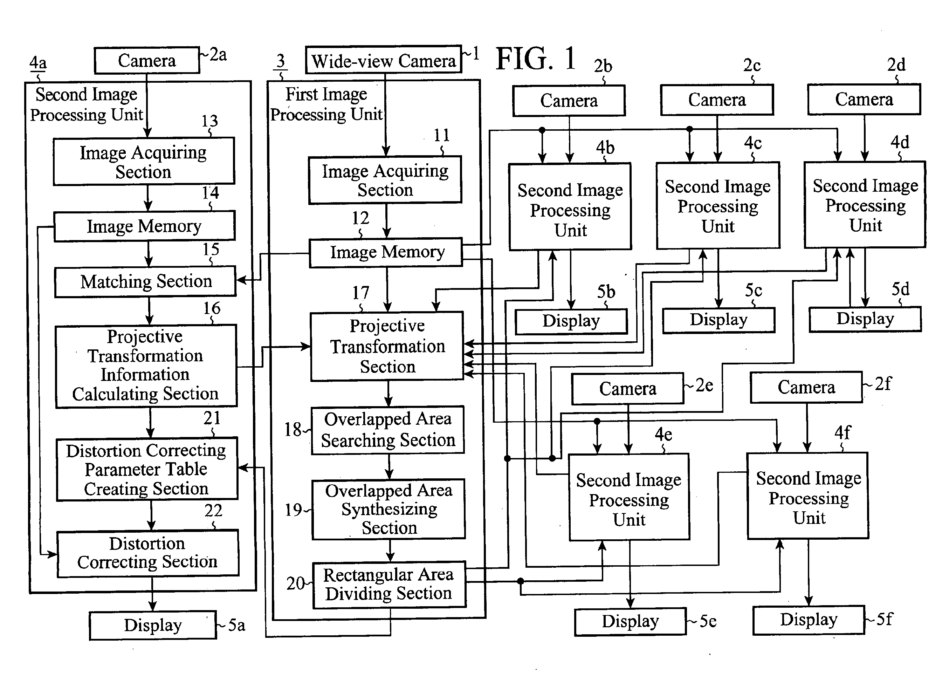

FIG. 1 is a block diagram showing a configuration of a display of an embodiment 1 in accordance with the present invention. In FIG. 1, a wide-view camera 1, which corresponds to a common digital video camera provided with a wide-angle lens, for example, takes a prescribed imaging area at a wide view. Incidentally, the wide-view camera 1 constitutes a wide-view imaging means.
Cameras 2a, 2b, 2c, 2d, 2e and 2f, which correspond to a common digital video camera with a visual field narrower than the wide-view camera 1, take individual partial areas in the imaging area taken with the wide-view camera 1. Incidentally, the cameras 2a, 2b, 2c, 2d, 2e and 2f constitute a partial imaging means.

A first image processing unit 3 acquires an image of the imaging area taken with the wide-view camera 1, and executes prescribed image processing.
Second image processing units 4a, 4b, 4c, 4d, 4e and 4f acquire images of the partial areas taken with the cameras 2a, 2b, 2c, 2d, 2e and 2f, correct the distortion of the images of the partial areas, and execute processing of displaying on displays 5a, 5b, 5c, 5d, 5e and 5f.
Although the example of FIG. 1 shows an internal configuration of the second image processing unit 4a, internal configurations of the second image processing units 4b, 4c, 4d, 4e and 4f are the same as that of the second image processing unit 4a.
Incidentally, although the components of the first image processing unit 3 and second image processing units 4a, 4b, 4c, 4d, 4e and 4f can be constructed from dedicated hardware, the first image processing unit 3 and second image processing units 4a, 4b, 4c, 4d, 4e and 4f can be constructed from a common general-purpose personal computer, and programs describing the processing contents of the individual components can be stored in a memory of the general-purpose personal computer so that the CPU of the general-purpose personal computer executes the programs.

An image acquiring section 11 of the first image processing unit 3 acquires the image of the imaging area taken with the wide-view camera 1, and executes processing of writing the image in an image memory 12.
The image memory 12 of the first image processing unit 3 is a memory for storing the image of the imaging area taken with the wide-view camera 1.

An image acquiring section 13 of the second image processing unit 4a acquires the image of the partial area taken with the camera 2a, and executes processing of writing the image in an image memory 14.
The image memory 14 of the second image processing unit 4a is a memory for storing the image of the partial area taken with the camera 2a.

A matching section 15 of the second image processing unit 4a executes matching processing for identifying in the imaging area taken with the wide-view camera 1 the area corresponding to the partial area taken with the camera 2a, that is, matching processing for identifying the area corresponding to the partial area by extracting feature points from the image of the imaging area stored in the image memory 12 and from the image of the partial area stored in the image memory 14, and by search for the feature points corresponding to each other.
A projective transformation information calculating section 16 of the second image processing unit 4a executes processing of calculating projective transformation information used for projecting the image of the partial area taken with the camera 2a onto the image space of the area identified by the matching section 15.
Incidentally, the matching section 15 and the projective transformation information calculating section 16 constitute an area identifying means.

A projective transformation section 17 of the first image processing unit 3, using the projective transformation information calculated by the projective transformation information calculating sections 16 of the second image processing units 4a, 4b, 4c, 4d, 4e and 4f, executes the processing of projecting the images of the plurality of partial areas onto the image spaces of the corresponding areas. Incidentally, the projective transformation section 17 constitutes an image projection means.

An overlapped area searching section 18 of the first image processing unit 3 executes the processing of searching for the overlapped areas of the images of the plurality of partial areas projected by the projective transformation section 17.
An overlapped area synthesizing section 19 of the first image processing unit 3 executes the processing of synthesizing the overlapped areas of the images of the plurality of partial areas searched for by the overlapped area searching section 18.
A rectangular area dividing section 20 of the first image processing unit 3 executes the processing of dividing the image after the synthesis by the overlapped area synthesizing section 19 into a plurality of rectangular areas.
Incidentally, the overlapped area searching section 18, overlapped area synthesizing section 19 and rectangular area dividing section 20 constitute a rectangular area dividing means.

A distortion correcting parameter table creating section 21 of the second image processing unit 4a executes the processing of creating a distortion correcting parameter table from the projective transformation information calculated by the projective transformation information calculating section 16 on the basis of the rectangular areas resulting from the division by the rectangular area dividing section 20.
A distortion correcting section 22 of the second image processing unit 4a, referring to the distortion correcting parameter table created by the distortion correcting parameter table creating section 21, corrects the distortion of the images of the partial areas stored in the image memory 14, and executes the processing of displaying the image after the correction on the display 5a.
Incidentally, the distortion correcting parameter table creating section 21 and distortion correcting section 22 constitute a distortion correcting means.

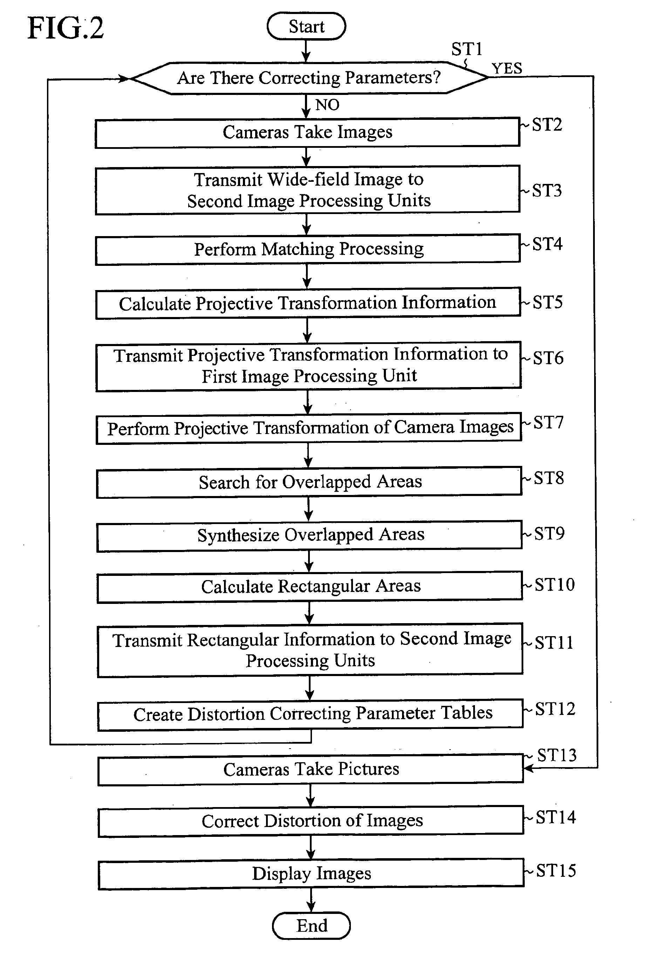

FIG. 2 is a flowchart showing the processing contents of the display of the embodiment 1 in accordance with the present invention.

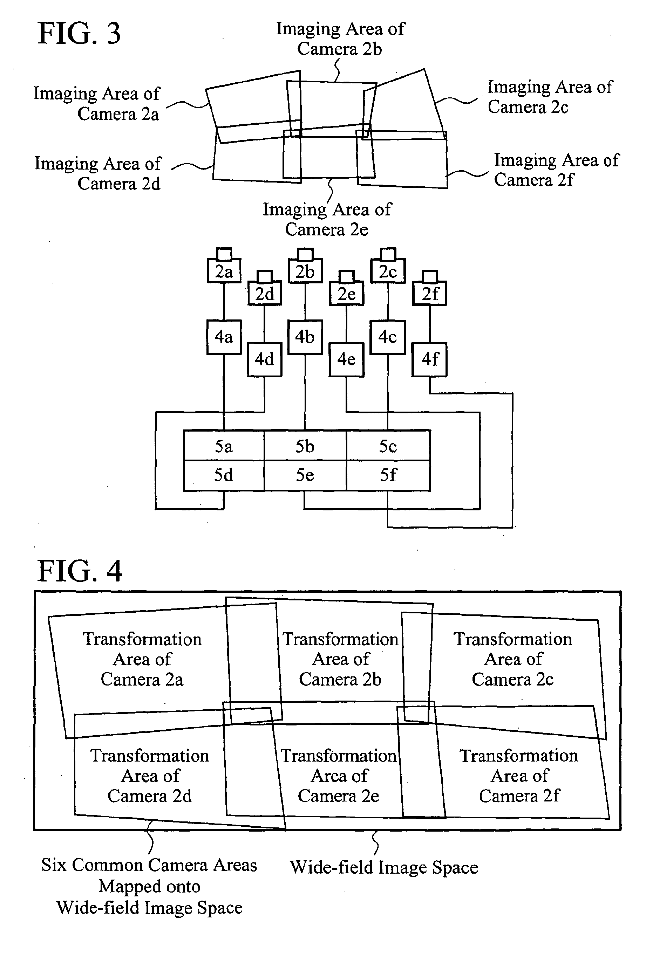

Next, the operation will be described.
The wide-view camera 1 in the present embodiment 1 has a wide-angle lens attached to the common digital video camera, and its resolution is assumed to be 1920 × 1080.
The cameras 2a, 2b, 2c, 2d, 2e and 2f are arranged so as to take the individual partial areas in the imaging area of the wide-view camera 1 as shown in FIG. 3, in which they are placed in an arrangement of roughly 2 × 3 in the vertical and horizontal directions. The resolution of the cameras 2a, 2b, 2c, 2d, 2e and 2f is assumed to be 1920 × 1080.
In addition, the displays 5a, 5b, 5c, 5d, 5e and 5f are placed in a grid-like fashion in 2 × 3 in the vertical and horizontal directions as shown in FIG. 3, in which their arrangement agrees relatively with the positions of the partial areas taken with the cameras 2a, 2b, 2c, 2d, 2e and 2f. The resolution of the displays 5a, 5b, 5c, 5d, 5e and 5f is assumed to be 1920 × 1080.

As for the resolution of the cameras 2a - 2f and the resolution of the displays 5a - 5f, even if they are set without any correlation, no problem occurs.
In the present embodiment 1, although the numbers of the cameras, second image processing units and displays are each assumed to be six, a configuration is also possible in which their numbers are increased without any limitation as long as their relative positional relationships are maintained.

In the initial state, since the correcting parameters for correcting the distortion of the images taken with the cameras 2a - 2f have not been created (step ST1), the creating processing of the correcting parameters is started.
First, the wide-view camera 1 takes a prescribed imaging area at a wide view (step ST2), and outputs the image of the imaging area to the first image processing unit 3.
The image acquiring section 11 of the first image processing unit 3 acquires the image of the imaging area output from the wide-view camera 1, and executes the processing of writing the image in the image memory 12.

The cameras 2a - 2f also take the individual partial areas simultaneously with the wide-view camera 1 (step ST2), and output the images of the partial areas to the second image processing units 4a - 4f.
The image acquiring sections 13 of the second image processing units 4a - 4f acquire the images of the partial areas output from the cameras 2a - 2f, and execute the processing of writing the images in the image memories 14.

The matching sections 15 of the second image processing units 4a - 4f acquire the image of the imaging area taken with the wide-view camera 1 from the image memory 12 of the first image processing unit 3 (step ST3).
In addition, the matching sections 15 execute matching processing for identifying in the imaging area taken with the wide-view camera 1 the areas corresponding to the partial areas taken with the cameras 2a - 2f, that is, matching processing for identifying the areas corresponding to the partial areas by extracting feature points from the image of the imaging area taken with the wide-view camera 1 and from the images of the partial areas stored in the image memories 14, and by search for the feature points corresponding to each other (step ST4).

The matching processing is a method of extracting the feature points from the individual images, and considering the feature points having information similar to each other as the same points.
For example, a method called SIFT (Scale-invariant feature transform) extracts the feature points of the image of the imaging area taken with the wide-view camera 1 and the feature points of the images of the partial areas taken with the cameras 2a - 2f as 128-dimentional vectors, and carries out matching by considering the feature points with small Euclidean distances as the same points.
Incidentally, as for the extracting method of the feature points, it is not limited to SIFT. For example, a detecting method of using a Harris operator can be used, or a feature point extracting method such as "Speeded up robust features" can be used instead.

The projective transformation information calculating sections 16 of the second image processing units 4a - 4f calculate the projective transformation information used for projecting the images of the partial areas taken with the cameras 2a - 2f onto the image spaces of the areas identified by the matching section 15 (the image spaces of the areas corresponding to the partial areas in the imaging area taken with the wide-view camera 1) (step ST5). Thus, they calculate the coordinate transformation information (projective transformation information) from the image spaces of the cameras 2a - 2f to the image space of the wide-view camera 1. For example, they calculate the coordinate transformation information (projective transformation information) according to a plane projective transformation.
The plane projective transformation can be expressed by a 3 × 3 matrix, and it is known that the coordinate transformation information (projective transformation information) can be calculated if there are four or more corresponding groups between the coordinates before transformation and the coordinates after the transformation.
Accordingly, if four or more pieces of the matching information (groups of the feature points considered to be the same points) can be acquired from the matching section 15, the coordinate transformation information (projective transformation information) from the image spaces of the cameras 2a - 2f to the image space of the wide-view camera 1 can be calculated.

Incidentally, the matching information output from the matching section 15 can sometimes contain a lot of errors, and if the matching information is applied to the calculation of the plane projective transformation, the accuracy of the coordinate transformation can sometimes be impaired.
For this reason, when the projective transformation information calculating section 16 calculates the coordinate transformation information (projective transformation information) according to the plane projective transformation, it is desirable to increase the accuracy of the coordinate transformation by calculating by adding a Robust method (such as the least squares method, M estimation, and "Random Sample Consensus").
Although an example of calculating the coordinate transformation information (projective transformation information) according to the plane projective transformation is explained here, the method is not limited to it. For example, it is also possible to calculate the coordinate transformation information (projective transformation information) by a linear transformation such as scaling and translation on an Euclidean space or by a general transformation such as affine transformation.

The projective transformation section 17 of the first image processing unit 3 collects the projective transformation information calculated by the projective transformation information calculating sections 16 of the second image processing units 4a, 4b, 4c, 4d, 4e and 4f (step ST6).
In addition, the projective transformation section 17, using the projective transformation information calculated by the projective transformation information calculating sections 16 of the second image processing units 4a, 4b, 4c, 4d, 4e and 4f, projects the plurality of the images of the partial areas onto the image spaces of the corresponding areas (step ST7).

FIG. 4 is a diagram showing a manner of projective transformation of the images of the partial areas taken with the cameras 2a - 2f onto the image spaces of the areas identified by the matching sections 15 (image spaces of the areas corresponding to the partial areas in the imaging area taken with the wide-view camera 1).
As for the four coordinates at the endpoints of the image spaces of the cameras 2a - 2f, that is, (0, 0), (1919, 0), (0, 1079) and (1919, 1079), the projection can obtain their coordinate values on the image space of the wide-view camera 1 by individually transforming them using six projective transformations transmitted.
Incidentally, it is assumed that the point at the upper left corner of the image is (0, 0), and that the coordinate values increase as they go further right in the horizontal direction and lower in the vertical direction.

The overlapped area searching section 18 of the first image processing unit 3 searches for overlapped areas of the images of the plurality of partial areas (images of the six areas) after the projection when the projective transformation section 17 projects the images of the plurality of partial areas onto the image spaces of the corresponding areas (step ST8).

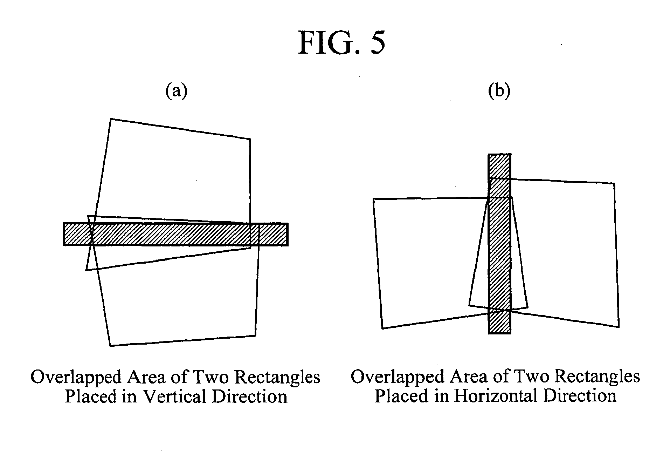

FIG. 5 is a diagram showing an example of the overlapped areas.
It searches for the overlapped areas for each two vertically and horizontally adjacent areas.
As shown in FIG. 5(a), when the two areas overlap vertically, it searches for, as the overlapped area, an area between the y coordinate of the uppermost point of the bottom side of the upper rectangle and the y coordinate of the lowermost point of the top side of the lower rectangle.
In addition, as shown in FIG. 5(b), when the two areas overlap horizontally, it searches for, as the overlapped area, an area between the x coordinate of the leftmost point of the right side of the left rectangle and the x coordinate of the rightmost point of the left side of the right rectangle.

When the overlapped area searching section 18 has searched for all the overlapped areas, the overlapped area synthesizing section 19 of the first image processing unit 3 synthesizes the overlapped areas adjacent to each other vertically and horizontally (step ST9). The synthesis of the overlapped areas is carried out for each row or column of the overlapped areas.

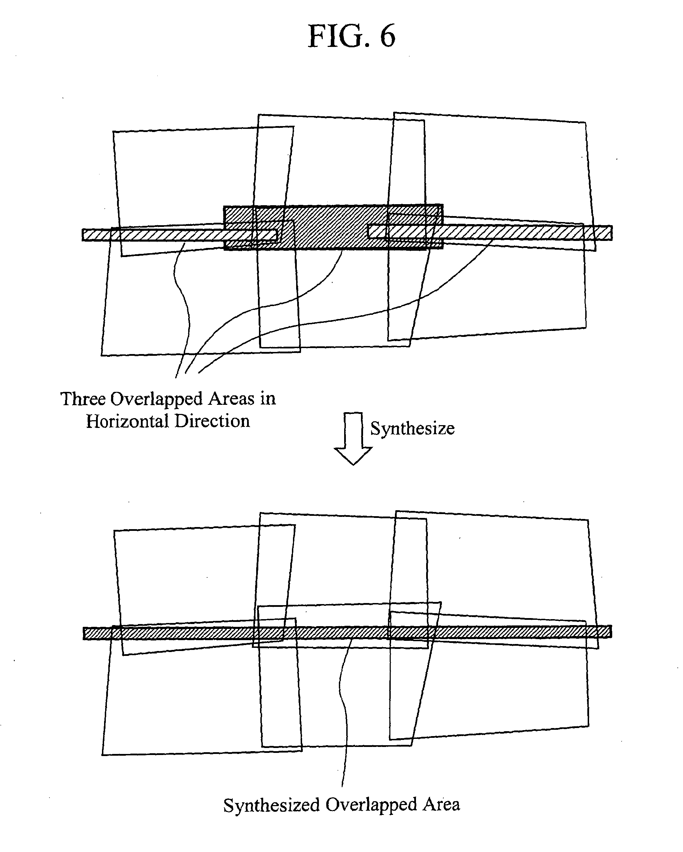

FIG. 6 is a diagram showing a manner of synthesizing the overlapped areas in the horizontal direction.

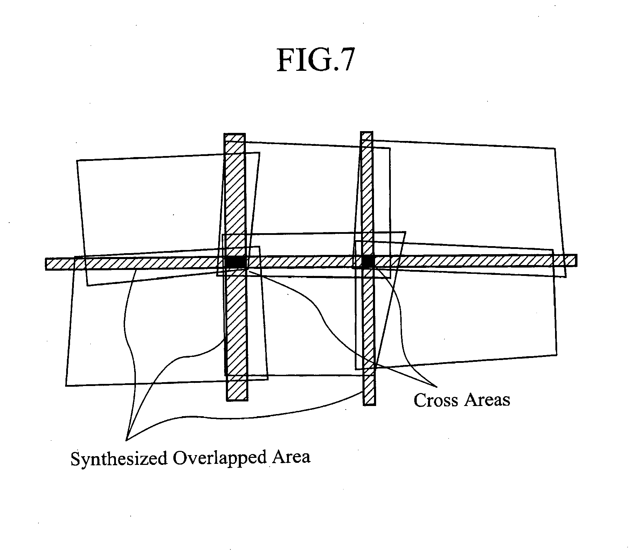

When the overlapped area synthesizing section 19 has synthesized the overlapped areas, the rectangular area dividing section 20 of the first image processing unit 3 divides the image after the synthesis into a plurality of rectangular areas (step ST10).
Details of the concrete processing of the rectangular area dividing section 20 are as follows.
First, as shown in FIG. 7, the rectangular area dividing section 20 obtains cross areas of the overlapped areas synthesized by the overlapped area synthesizing section 19, and selects any two adjacent cross areas.
As for a display arrangement of 2 × 3 regions in the vertical and horizontal directions, there are only two cross areas. However, as for a display arrangement of m × n regions in the vertical and horizontal directions, since there are (m-1) × (n-1) cross areas in general, two adjacent cross areas are selected from them.
From each of the two cross areas selected, one point is selected, and the points are made reference points.
The reference points must have the same y coordinate when the cross areas are adjacent in the horizontal direction, and have the same x coordinates when they are adjacent in the vertical direction.

Next, the rectangular area dividing section 20 creates rectangular areas of the number of displays in accordance with the reference points.

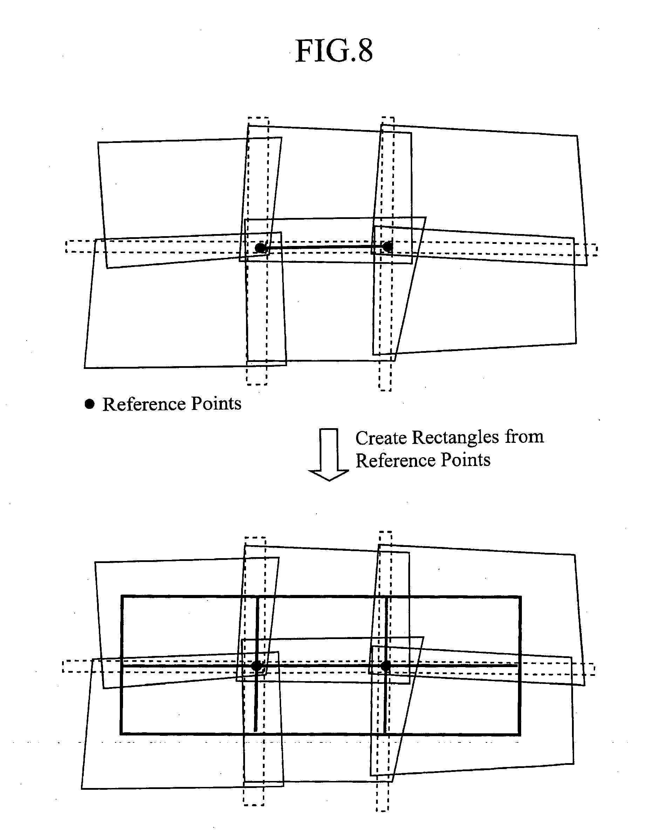

FIG. 8 is a diagram showing a manner of creating the rectangular areas.
As for the creation of the rectangular areas, it creates a rectangular area in such a manner as to employ the line segment across the two reference points as a side and to have the aspect ratio of the displays 5a - 5f, and covers the regions with the rectangular areas in the same manner as the arrangement of the displays 5a - 5f.
Here, since the resolution of the displays 5a - 5f is 1920 × 1080, the rectangles are formed so as to maintain 16:9.

After creating the plurality of rectangular areas, the rectangular area dividing section 20 outputs the rectangular areas as the final division rectangular information if conditions are satisfied that all the cross points of the four rectangles are contained in the cross areas and the whole rectangular areas are within the camera area.
Unless the foregoing conditions are satisfied, it selects two reference points again, and carries out the similar processing.
The rectangular information about the division thus obtained is transmitted to the second image processing units 4a - 4f (step ST11) .
Incidentally, the rectangular information about the division consists of the upper left coordinate values and the lower right coordinate values of the rectangle.

Receiving the rectangular information about the division from the rectangular area dividing section 20, the distortion correcting parameter table creating sections 21 of the second image processing units 4a - 4f, using the rectangular information, create the distortion correcting parameter tables from the projective transformation information calculated by the projective transformation information calculating sections 16 (step ST12).
The concrete processing contents of the distortion correcting parameter table creating sections 21 are as follows.
First, using the rectangular information transmitted from the rectangular area dividing section 20 and the coordinate information at the four corners of the displays 5a - 5f, the distortion correcting parameter table creating sections 21 obtain projective transformation P from the coordinate systems of the displays 5a - 5f onto the image coordinate system of the wide-view camera 1.
More specifically, they obtain the projective transformation P as corresponding points of the four points (0, 0), (1919, 0), (0, 1079), (1919, 1079) of the displays 5a - 5f and the four points (dsx, dsy), (dex, dsy), (dsx, dey), (dex, dey) of the division rectangular area.

Next, the distortion correcting parameter table creating sections 21 obtain inverse transformation of the projective transformation information calculated by the projective transformation information calculating sections 16, and obtain projective transformation invH from the image coordinate system of the wide-view camera 1 onto the image coordinate systems of the cameras 2a - 2f.
Next, the distortion correcting parameter table creating sections 21 obtain composite transformation invH·P of the projective transformation invH and the projective transformation P.
Incidentally, the composite transformation invH·P corresponds to the projective transformation from the coordinate systems of the displays 5a - 5f onto the image coordinate systems of the cameras 2a - 2f.

Using the composite transformation invH·P makes it possible to correct the distortion of the images taken with the cameras 2a - 2f and to display them on the displays 5a - 5f.
The correcting parameters are created from the tables, and applying the composite transformation invH·P to all the coordinates of the displays 5a - 5f from (0, 0) to (1919, 1079) makes it possible for all the pixels of the displays 5a - 5f to obtain which pixels of the cameras 2a - 2f they refer to.

The distortion correcting sections 22 of the second image processing units 4a - 4f correct, when the distortion correcting parameter table creating sections 21 create the distortion correcting parameter tables, the distortion of the images of the partial areas stored in the image memory 14 by referring to the distortion correcting parameter tables (step ST13 and ST14), and display the images after the correction on the displays 5a - 5f (step ST15).

This enables the displays 5a - 5f to display the images with the same contents as the image taken with the wide-view camera 1 at a high resolution.
Incidentally, once the correcting parameter tables have been created, the same correcting parameter tables can be used as long as the settings of the cameras 1 and 2a - 2f and of the displays 5a - 5f are maintained. Accordingly, from this point forward, the displays 5a - 5f can display the images after the distortion correction without executing the processing of creating the correcting parameter tables every time the cameras 2a - 2f take the partial areas.

As is clear from the foregoing description, according to the present embodiment 1, since it is configured in such a manner that it includes the plurality of matching sections 15 for identifying the areas corresponding to the partial areas taken with the cameras 2a - 2f in the imaging area taken with the wide-view camera 1, the projective transformation section 17 for projecting the images of the partial areas taken with the cameras 2a - 2f onto the image spaces of the areas identified by the matching sections 15, the overlapped area synthesizing section 19 for synthesizing the overlapped areas of the images of the plurality of partial areas projected by the projective transformation section 17, and the rectangular area dividing section 20 for dividing the image after the synthesis to a plurality of rectangular areas, and that the plurality of distortion correcting sections 22 correct the distortion of the images of the partial areas taken with the cameras 2a - 2f in accordance with the rectangular areas resulting from the division by the rectangular area dividing section 20, and display the images after the correction on the displays 5a - 5f, it offers an advantage of being able to display wide-field, high-resolution images on a large screen.
Thus, it offers an advantage of being able to display the images passing through the distortion correction easily without restriction on the configuration and number of the displays, and to carry out the high-resolution display without any limitation on the resolution of the displays.

### EMBODIMENT 2

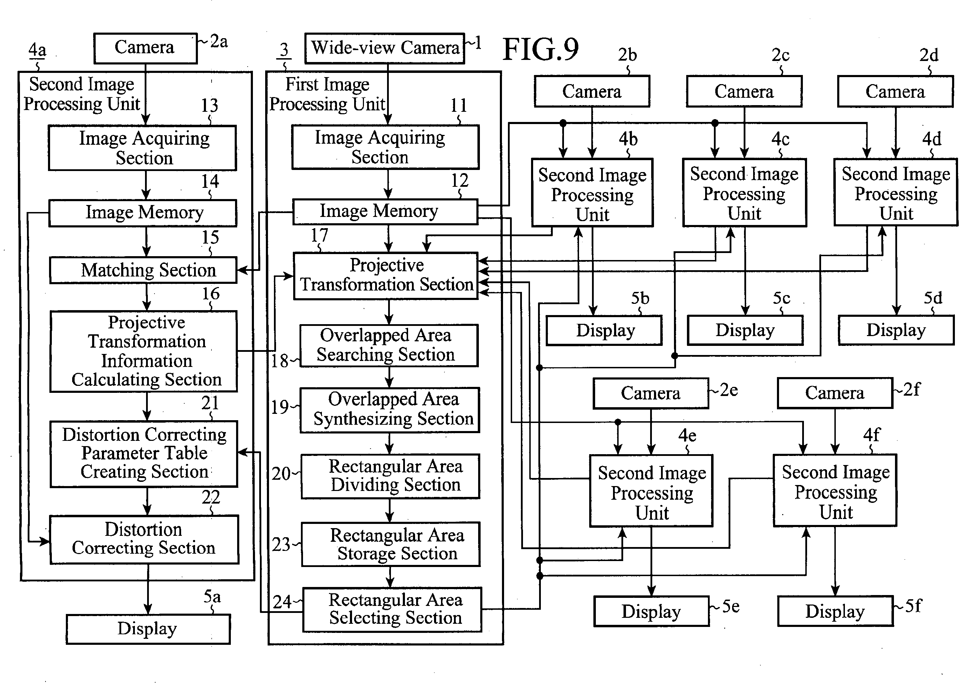

FIG. 9 is a block diagram showing a configuration of a display of an embodiment 2 in accordance with the present invention. In FIG. 9, since the same reference numerals as those of FIG. 1 designate the same or like portions, they description will be omitted here.
A rectangular area storage section 23 stores the rectangular areas resulting from the division by the rectangular area dividing section 20. Incidentally, the rectangular area storage section 23 constitutes a rectangular area storage means.
A rectangular area selecting section 24 selects, from the rectangular areas stored in the rectangular area storage section 23, a rectangular area meeting a prescribed condition (for example, a condition for selecting the maximum rectangular area, a condition for selecting the minimum rectangular area, and a condition for selecting a rectangular area closest to the center of the imaging area taken with the wide-view camera 1), and outputs the rectangular information about the rectangular area to the distortion correcting parameter table creating sections 21 of the second image processing units 4a - 4f. Incidentally, the rectangular area selecting section 24 constitutes a rectangular area selecting means.

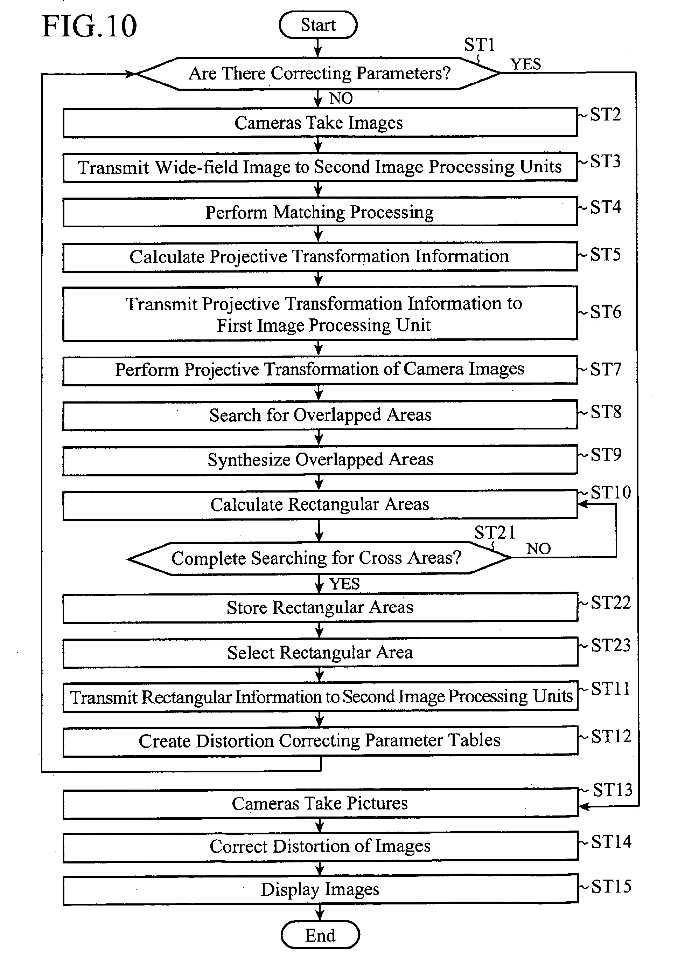

FIG. 10 is a flowchart showing processing contents of the display of the embodiment 2 in accordance with the present invention.

Next, the operation will be described.
In this case, however, since it is the same as the foregoing embodiment 1 except that it has the rectangular area storage section 23 and rectangular area selecting section 24, the operation of the rectangular area storage section 23 and rectangular area selecting section 24 will be described mainly.

In the foregoing embodiment 1, although the rectangular area dividing section 20 selects the total of two reference points, each from the two cross areas, and makes a decision as to whether the rectangle can be divided or not, the present embodiment 2, using the point at the upper left corner of a single cross area as a first reference point, scans all the points that can become a reference point on the second cross area adjacent thereto, and makes a decision for each point as to whether the rectangular can be divided.
As for the points eligible for a reference point, it is necessary as in the foregoing embodiment 1 that the y coordinates are the same when the cross areas are adjacent horizontally, or the x coordinates are the same when they are adj acent vertically.

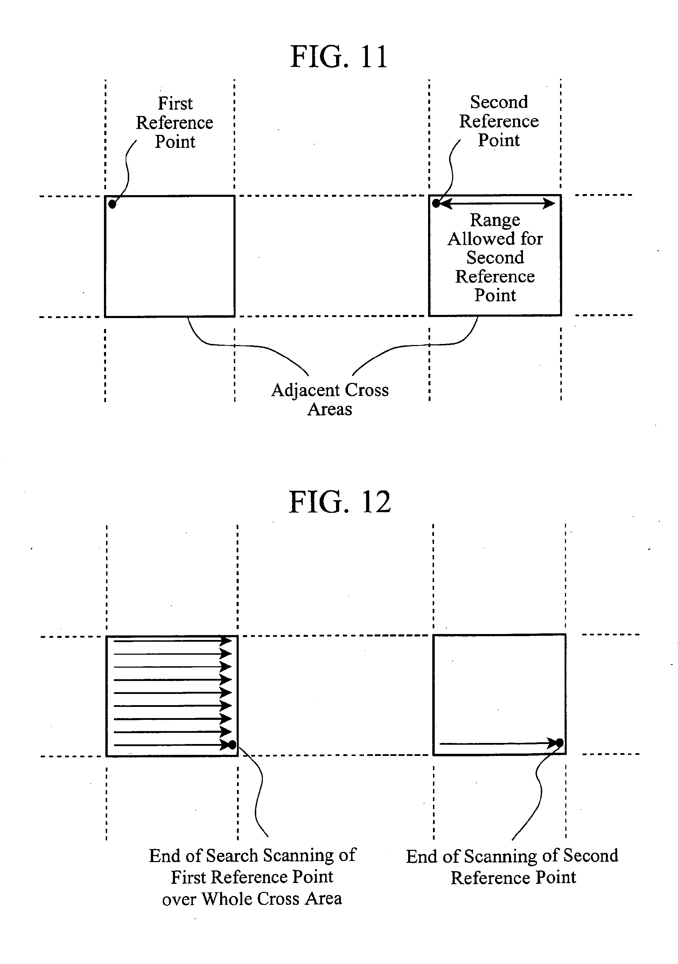

FIG. 11 is a diagram showing the points eligible for a reference point.

The rectangular area dividing section 20 stores, during the scanning and if the rectangular division is possible, the coordinate values of the rectangular area into the rectangular storage section 23 as the rectangular information about the rectangular area divided. Since the decision as to whether the rectangular division is possible or not is the same as the foregoing embodiment 1, the detailed description thereof is omitted here.
When the scanning within a range eligible for the second reference point has been completed, followed by a decision as to whether the rectangular division is possible or not, the first reference point is moved by one pixel next, and the same processing of moving the second reference point is carried out.
When completing the decision as to the rectangular division for all the points within the cross area to which the first reference point belongs after successively executing the foregoing processing, the rectangular search processing by the rectangular area dividing section 20 terminates (see FIG. 12).

When the rectangular search processing by the rectangular area dividing section 20 has been completed (step ST21), the rectangular information about the plurality of rectangular areas is stored in the rectangular area storage section 23 (step ST22) .
The rectangular area selecting section 24 selects from the rectangular areas stored in the rectangular area storage section 23 the rectangular area meeting the condition for selecting the maximum rectangular area, for example (step ST23), and outputs the rectangular information about the rectangular area to the distortion correcting parameter table creating sections 21 of the second image processing units 4a - 4f (step ST11).

As a method of selecting the maximum rectangular area, a method is conceivable which compares the widths of the rectangular areas in the plurality of rectangular areas and selects one with the greatest width.
Although an example that selects the maximum rectangular area is shown here, it is not limited to that. For example, the condition can be set for selecting the minimum rectangular area or for selecting the rectangular area closest to the center of the imaging area taken by the wide-view camera 1, and the minimum rectangular area or the rectangular area closest to the center of the imaging areas can be selected.
In addition it is also possible to select the rectangular area to be kept at the leftmost edge or the rectangular area to be kept at the rightmost edge.

### INDUSTRIAL APPLICABILITY

As described above, the display in accordance with the present invention is suitable for displaying a high-resolution, wide-field image on a large screen.

## Claims

1. A display comprising:
wide-view imaging means for taking a prescribed imaging area;
a plurality of partial imaging means for taking individual partial areas in the imaging area to be taken with the wide-view imaging means;
a plurality of area identifying means for identifying corresponding areas to the partial areas taken with the partial imaging means in the imaging area taken with the wide-view imaging means;
image projection means for projecting the images of the partial areas taken with the plurality of partial imaging means onto image spaces of the areas identified by the area identifying means;
rectangular area dividing means for synthesizing overlapped areas of the images of the plurality of partial areas projected by the image projection means, and for dividing the image after the synthesis to a plurality of rectangular areas; and
a plurality of distortion correcting means for correcting distortion of the images of the partial areas taken with the partial imaging means in accordance with the rectangular areas to which the rectangular area dividing means divides, and for displaying images after the correction on displays.

2. The display according to claim 1, wherein
the image projection means performs, when projecting the images of the partial areas taken with the plurality of partial imaging means onto the image spaces of the corresponding areas, a plane projective transformation, linear transformation or affine transformation of the images of the partial areas onto the image spaces of the corresponding areas.

3. The display according to claim 1, wherein
the area identifying means identifies, when identifying the corresponding areas to the partial areas taken with the partial imaging means in the imaging area taken with the wide-view imaging means, the corresponding areas to the partial areas by extracting feature points from the image of the imaging area and from the images of the partial areas, and by search for the feature points having correspondence to each other.

4. The display according to claim 1, further comprising:
rectangular area storage means for storing rectangular areas divided by the rectangular area dividing means; and
rectangular area selecting means for selecting a rectangular area meeting a condition from the rectangular areas stored in the rectangular area storage means, and for outputting the rectangular area to the distortion correcting means.

5. The display according to claim 4, wherein
the rectangular area selecting means employs, as the condition, a condition for selecting a maximum rectangular area, a condition for selecting a minimum rectangular area or a condition for selecting a rectangular area closest to the center of the imaging area to be taken with the wide-view imaging means.
